Europäisches Patentamt

European Patent Office

Office européen des brevets

(11) Publication number: **0 407 577 B1**

# EUROPEAN PATENT SPECIFICATION

(45) Date of publication of patent specification: **01.06.94** (51) Int. Cl.5: **B29C 45/80**, B29C 45/76

(21) Application number: **89901882.4**

(22) Date of filing: **27.01.89**

(86) International application number:
**PCT/JP89/00075**

(87) International publication number:
**WO 90/08638 (09.08.90 90/19)**

(54) **METHOD AND APPARATUS FOR CONTROLLING INJECTION MOLDING.**

(43) Date of publication of application:
**16.01.91 Bulletin 91/03**

(45) Publication of the grant of the patent:
**01.06.94 Bulletin 94/22**

(84) Designated Contracting States:
**BE DE FR GB IT NL**

(56) References cited:
**CH-A- 553 053**
**FR-A- 2 206 181**
**FR-A- 2 247 332**
**US-A- 3 982 440**
**US-A- 4 135 873**

(73) Proprietor: **NAKAYAMA KOGYO CO., LTD**
**402, Aza Shinkai**
**Chikumasawa**
**Miyoshi-machi**
**Iruma-gun Saitama 354(JP)**

(72) Inventor: **YOSHIKAWA, Yukio**
**17-11, Ohaza Fujikubo**
**Miyoshi-machi**
**Iruma-gun Saitama 354(JP)**

(74) Representative: **Goddar, Heinz J., Dr. et al**
**FORRESTER & BOEHMERT**
**Franz-Joseph-Strasse 38**
**D-80801 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

Technical Field

The present invention relates to a technique of controlling injection molding that uses thermoplastic resins, and more particularly to a method of controlling injection molding by grasping generally the molding on the basis of informations that can be detected simply, and a controlling apparatus therefor.

Background Art

Injection molding of synthetic resins is generally carried out by injecting a melted resin into a mold that has been clamped, then cooling the resin to allow the resin to solidify, and opening the mold to remove the molded article. Therefore, in order to control molding, it is required to monitor the raw material system and the molding machine system. With respect to monitoring of the raw material system, there are informations, for example, on the plasticizing temperature of the synthetic resin, the plasticizing time, the injection amount per injection, and the injection pressure, and with respect to monitoring of the molding machine system, there are informations, for example, on the clamping pressure of the mold, the temperature in the cavities, the cooling temperature of the mold, and the cooling speed. In conventional control of injection molding, these informations are measured for each article to be molded, each raw material to be used, and each molding machine to be used, and the control is effected on the basis of the measured results. However, in the actual molding, ever-changing various factors such as a change in the temperature of the cooling water, a change in the feed of the cooling water, a change in the temperature of the hot runner section, a change in the gas escaping from the cavities, a change in the physical properties of the raw material such as the viscosity, an obstruction due to adhesion of foreign materials onto the gate or the like, a change in temperature and humidity of the surroundings, and a change in the oil temperature of the cylinder for clamping are involved thereby causing accidental failure which will result in short molding, formation of burrs, etc. If such failure occurs, all the products must be checked, inevitably leading to temporary suspension. Sometimes the dimensional accuracy of some products scatters outside the standard even if short moldings or burrs on the products are not formed, then in that case, check of the appearance such as check of short moldings or burrs cannot be carried out, and the sizes of all of the products are needed to be measured. Further in the case of products whose function cannot be confirmed by the measurement of the size or the like, there is not other test than the destructive test, and since recent molded articles are required to have not only a function as, for example, a container but also an additional composite function, check to identify whether an article is good one or defective one is quite important. As measures against that, it is considered to detect the above variable factors and to take measures according to the amounts of the changes. However, it is not practical to check all these factors, since it is required not only to provide a number of detecting means such as sensors, which will enlarge the controlling apparatus, but also to change the design of the molding machine. Particularly, it is impossible to check all the factors in the case of multi-cavity molding for obtaining a plurality of molded articles in a single injection, since the number of checks increases. Further, if such check is carried out, it is impossible to prevent defectives from being produced. This is because not only the above factors are combined but also the frequency of use of the molding machine and the mold, and other factors will be added, which results in the formation of defectives.

In a method according to US-A 4,135,873, the amount of mold opening is detected at a predetermined position of the injection plunger, for example at an injection speed switching point. The thus detected amount of mold opening is not the maximum value and does not precisely represent the quality of articles.

In CH-A 553 053, it is assumed that complete filling of the mould is achieved if a minimum gap is formed between the mold halves. However, such value cannot be reliable, since cases may occur in which high viscosity or the like prevents the resin from filling from all cavities of a mold. It is recognized in this document that other influencing factors can be used to judge whether or not the mold is filled. This means nothing less than inherent error sources in the known method.

The present invention has taken the above situation into consideration, and is intended to provide a method of controlling injection molding wherein the control of the molding is possible without checking a number of factors that vary at the time of molding and a controlling apparatus therefor. Particularly, the present invention is intended to provide a controlling method and a controlling apparatus wherein in the case of multi-cavity molding that uses a mold having a plurality of cavities, positive control is performed on the basis of informations that can be detected easily.

The above object of the invention is solved by the method as claimed in claim 1 and an apparatus as claimed in claim 2. Preferred embodiments of the apparatus are subject-matter of sub-claims 3 and 4.

Disclosure of the Invention

The present invention detects the maximum value of the amount of mold opening between a stationary mold and a movable mold that are opened inevitably by injection pressure, and judges whether the injection molding is good or not on the basis of the detected value. In the present invention, when molding is judged to be defective, the resulting defective article is treated differently from good articles thereby improving the effect of injection molding.

Mold opening reaches its maximum when the cavities are filled with the injected resin, and after the completion of the injection, the molds return to the original positions and the mold opening disappears. The inventors have found that if the maximum value of mold opening is within a prescribed range, good molding can be attained, while if the maximum value is outside the prescribed range, defective articles will be formed. That is, if the amount of mold opening is excessive, the molded article will have burrs, and if the amount of mold opening is too small, short molding will occur. This is because if the amount of mold opening is more than a needed amount, the melted resin will leak outside the cavities, and on the other hand if the amount of mold opening is less than the needed amount, the cavities will not be filled sufficiently with the melted resin, and will lack in the melted resin. Thus, mold opening is required to a certain degree in injection molding, but if mold opening falls outside a certain range, defective articles will be formed. Further, the inventors have studied and found that when a resin is injected into cavities, the amount of mold opening varies depending generally on a combination of the clamping pressure, suffered deterioration of and suffered damage to the steel of the clamping machine structure, the injection pressure, the injection speed, the amount of injection, the mold temperature, the oil temperature, the cooling water temperature, the amount of cooling water, the difference of the physical properties of the raw material, and other factors. That is, mold opening will be caused by a combination of variable factors involved in injection molding, and if the maximum value of the amount of mold opening is detected and is use as an index for judging the quality of articles, other factors are not required to be checked. This makes the control particularly advantageously easy in the case of multi-cavity molding wherein many items must be checked conventionally.

Brief Description of the Drawings

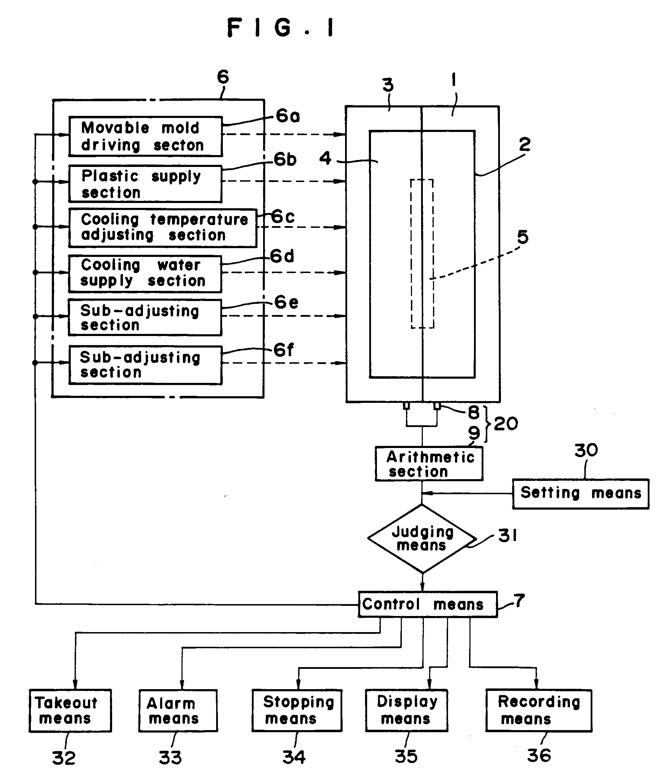

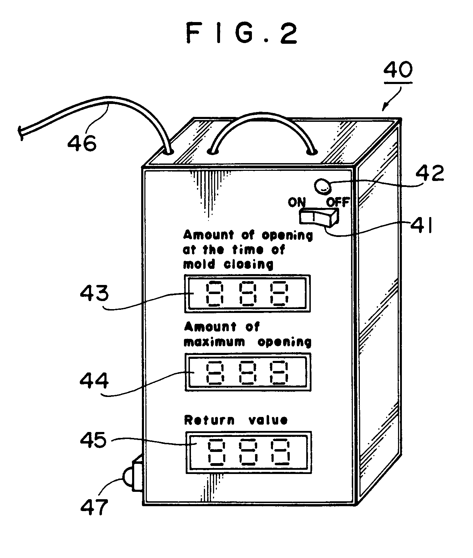

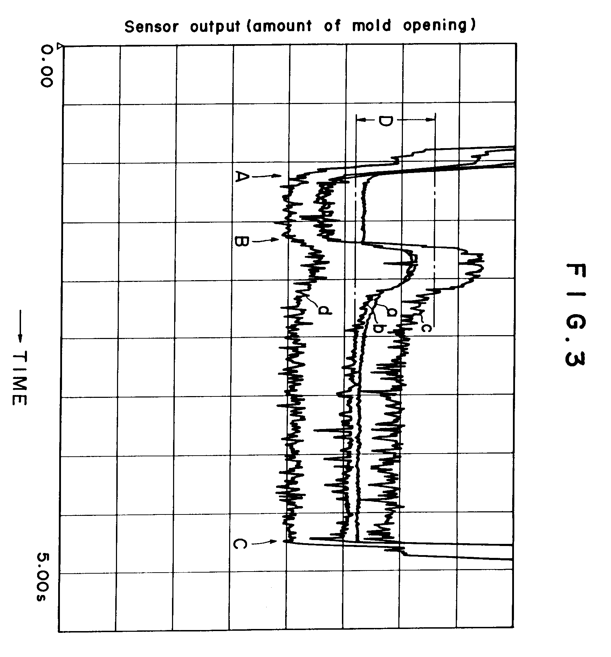

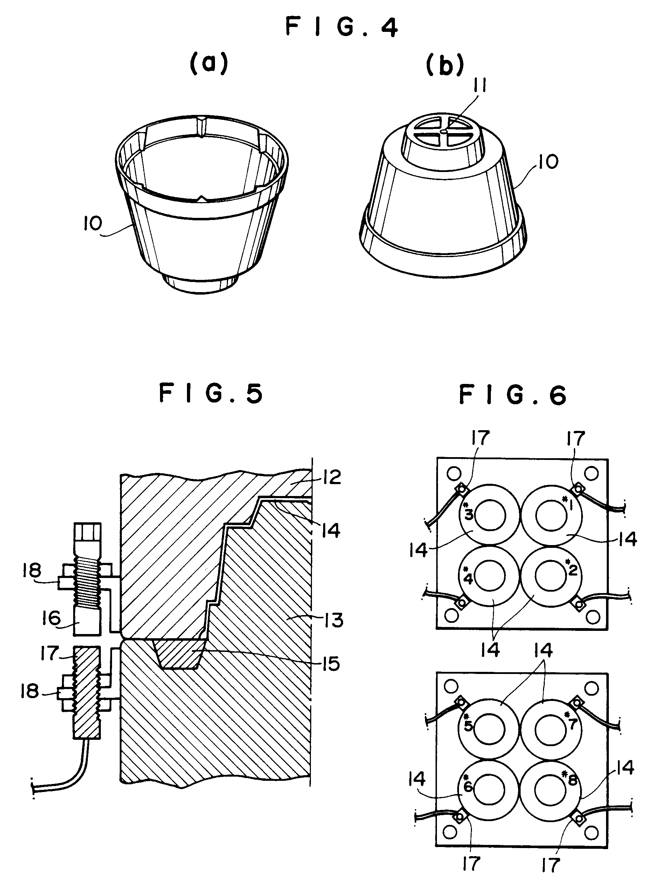

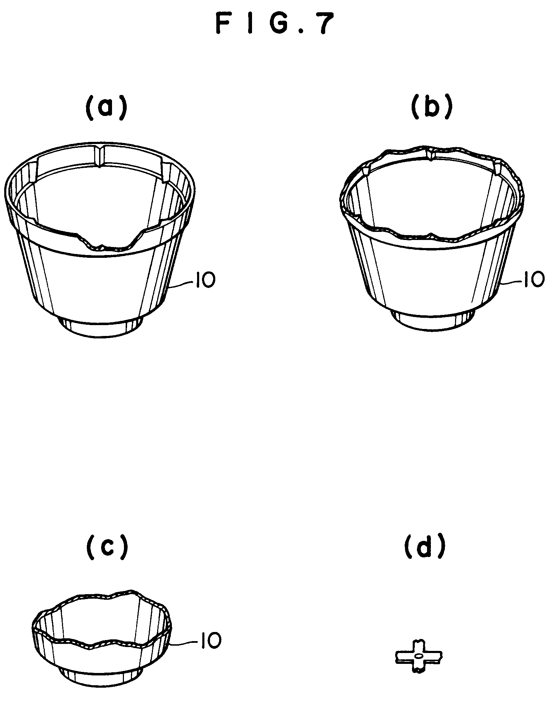

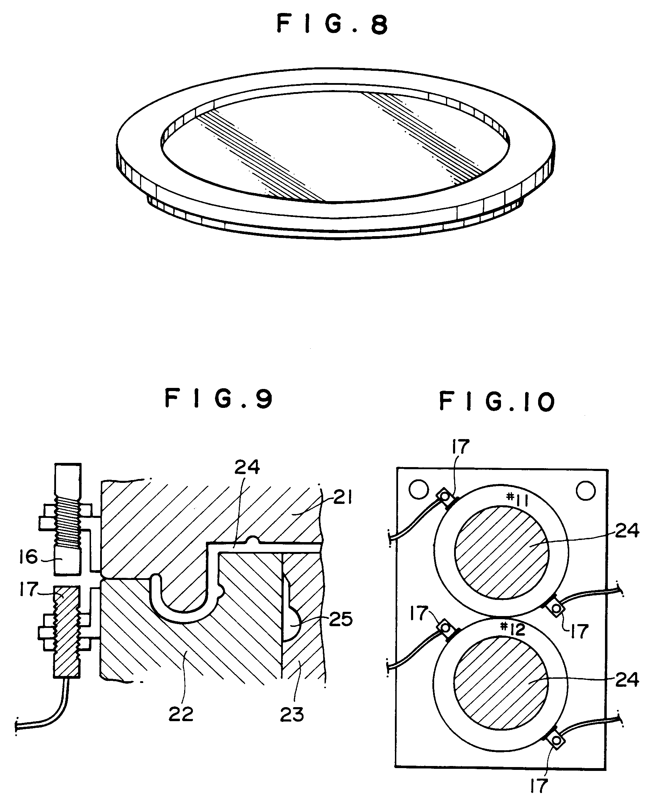

Fig. 1 is a general diagram of an injection molding machine and controlling apparatus suitable for carrying out the present invention; Fig. 2 is a perspective view of an embodiment of a measuring apparatus for measuring mold opening; Fig. 3 is a characteristic diagam showing mold opening; Fig. 4 is schematic views of an article molded in Example 1 of the present invention; Fig. 5 is a sectional view of parts of the molds used in Example 1; Fig. 6 is a front view of the arrangement of sensors; Fig. 7 is schematic views of several examples of unfavorable molded articles; Fig. 8 is a schematic view of the article molded in Example 2; Fig. 9 a sectional view of parts of the molds used in Example 2; and Fig. 10 is a front view of the mold showing the arrangement of sensors.

The Best Mode for Carrying out the Invention

The present invention will now be described with reference to the accompanying drawings.

Fig. 1 is a diagram showing the constitution of an embodiment of an injection molding machine equipped with a controlling apparatus for carrying out the present invention. A stationary mold 2 is mounted to a stationary side mounting block 1, and a movable mold 4 is mounted to a movable side mounting block 3. Cavities 5 that are in conformity with an article to be molded is formed between the opposed surfaces of the stationary mold 2 and the movable mold 4. A synthetic resin in a melted state is injected into the cavities 5 from the stationary mold 2 via a supply pipe (not shown), and is cooled and solidified in the cavities 5. The movable side block 3 on which the movable mold 4 is mounted is abutted and clamped against the stationary side mounting block 1 by power of a driving section such as a hydraulic cylinder, and then molding is carried out. After the molding, the movable side block 3 is retracted from the movable side mounting block 1 to open the cavities 5. With the cavities 5 opened, the molded articles are taken out by a robot hand (not shown). The removed molded articles are transported on a conveyer, and are packed into a box. The reference numeral 6 indicates a driving means of carrying out the above operation. The driving means 6 is equipped with a movable side mounting block driving section 6a for moving back and forth the movable side mounting block 3 and for adjusting the clamping under a prescribed pressure, a resin supply section 6b for injecting the melted resin into the cavities 5, a cooling temperature adjusting section 6c for adjusting the cooling rate of the melted resin and for adjusting the cooling temperature, etc., a cooling water supply section 6d for carrying out the supply and discharge of cooling water, and sub-adjusting sections 6e, 6f for carrying out other drivings than the above drivings concerning the molding. These drivings are controlled by control signals from a control means 7 wherein a prescribed program is stored. In addition to the above constitution, in this Example, a controlling apparatus is provided that is equipped with a detecting means 20, a setting means 30, a judging means 31, a takeout means 32, an alarm means 33, a stopping means 34, a display means 35, and a recording means 36. The detecting means 20 is a means of detecting the amount of mold opening caused by the injection pressure of the resin, and consists of sensors 8 and an arithmetic section 9. The sensors 8 are provided on the outer surfaces of the stationary side mounting block 1 and the movable side mounting block 3, are opposed to each other, and can detect opening that is brought about between the stationary side mounting block 1 and the movable side mounting block 3 by the injection pressure of the resin thereby detecting the amount of the mold opening between the stationary mold 2 and the movable mold 4. In compliance with the structure of the molds, in some cases, it is most effective that the sensors 8 are directly mounted to the stationary mold 2 and the movable mold 4. As these sensors, use can be made of, for example, (1) magnetic sensors that use the fact that magnetic lines of force change in accordance with the distance, and detect a change in exciting current due to the magnetic lines of force, (2) photosensors for detecting the number of slits that are moved by the mold opening, and other sensors. In this case, it is preferable to use a sensor having a detecting sensitivity on the order of micrometers since the mold opening is on the order of tens of micrometers. The arithmetic section 9 converts the detection signal outputted from the sensors 8 into the amount of mold opening. From the amount of mold opening obtained by the conversion, its maximum value is calculated and is outputted into the judging means 31. The judging means 31 compares the maximum value of the amount of mold opening outputted from the arithmetic section 9 with the set value inputted from the setting means 30. In the setting means 30, the upper limit value and the lower limit value of the amount of mold opening between the stationary mold 2 and the movable mold 4 are set previously and stored. The upper limit value and the lower limit value are set as critical points where defective molding will take place. Specifically, the upper limit value is an amount of mold opening immediately below the amount of mold opening where burrs will be formed, and the lower limit value is an amount of mold opening immediately over the amount of mold opening where short molding will occur. The upper limit value and the lower limit value will be depend on a combination of factors at the time of molding such as the clamping force, the injection pressure of the melted resin, and the amount of injection, and are difficult to be fixed absolutely. Therefore, it is practical and more quickly adaptable to carry out several tests before actual molding and to specify the upper limit value and the lower limit value from the test results. Thus, it is preferable that the upper limit value and the lower limit value of the amount of mold opening involved can be suitably renewed before a molding series, and the setting means 30 is equipped with memory means such as RAM for allowing this renewal. On the other hand, the judging means 31 detects the upper limit value and the lower limit value of the amount of mold opening set by the setting means 30, compares them with the detected values from the arithmetic section 9 of the detecting means 20, and judges whether they are within the range between the upper limit value and the lower limit value that are set. It is preferable that this judgment is carried out for every injection molding, but it is allowable that this judgment is carried out for several injection molding operations or tens of injection molding operations. The case where the latter judgment is allowable is based on an experimental rule that formation of burrs or short molding generally does not occur accidentally but takes place gradually as the number of the injection molding operations increases, and if the latter judgment is carried out for a certain number of injection molding operations, advantageously the amount of information can be reduced, and the statistics of the information can be taken and arranged easily.

The result judged by the judging means 31 in the above manner is outputted into the control means 7. Although the control means 7 is a means of controlling the driving means 6 for driving essentially the injection molding, the control means 7 in this Example is constructed in such a manner that it controls the driving means 6, and in addition, it controls the takeout means 32, the alarm means 33, the stopping means 34, the display means 35, and the recording means 36. The control of the takeout means 32, the alarm means 33 and the stopping means 34 among these means is carried out when a defective article is produced, and on the other hand the control of the display means 35 and the recording means 36 is carried out for the injection molding generally irrespective of a normal article or a defective article, and these means constitute a control system different from the driving means 6 for carrying out essentially the injection molding. Therefore, the control means 7 may be separated into a control section for controlling the driving means 6, and a control section for controlling the takeout means 32, the alarm means 33, the stopping means 34, the display means 35, and the recording means 36, with the latter controlling section made optional. Thus, the system and the program of the apparatus as a whole may be simplified, and can be generally used for other molding machine. The latter control in the control means 7 is carried out on the basis of the result of the judgment of the judging means 31. That is, if the detected value from the arithmetic section 9 of the detecting means deviates from the range of the set value of the setting means 30, the control means 7 controls the takeout means 32, the alarm means 33, and the stopping means 34. The takeout means 32 consists of a robot hand for taking out molded articles from the cavities 5, a conveyer for taking out the molded articles to the outside of the system, etc., and if a deviation signal is inputted into the judging means 31, the control means 7 judges the molded article as a defective, and controls the particular molded article to be taken out through a route different from that for normal molded articles. For example, the molded articles taken out from the cavities by the robot hand may be dropped in a port separated from the conveyer, or in the case wherein the molded articles are dropped under their own weight without using the robot hand, the conveyer may be driven reversely to take out the particular molded articles toward the side opposite to the side for the normal molded articles. The particular molded articles taken out through the route different from that for the normal molded articles are discriminated to be good or defective ones by an operator. The alarm means 33 is equipped with alarm members such as a buzzer, a lamp, etc. and when a deviation signal from the judging means 31 is inputted into the control means 7, the control means 7 controls them and actuates them. Thus, the operator's attention is aroused, and the judgment of quality of the article molded at the time when an alarm is issued is facilitated. The stopping means 34 is a means of stopping the movable side mounting block 3, and when a deviation signal from the judging means 31 is inputted into the control means 7, the control means 7 actuates the stopping means 34, and controls the stopping means 34 in such a way that the movement of the movable side mounding block 3 in the next molding may be stopped. By the stoppage of the movable side mounting block 3, the driving of other members including the injection cylinder, etc. is also synchronously stopped. Therefore, the injection molding is temporarily stopped, and the investigation or removal of the cause of the deviation signal is performed by the operator. In this case, if the deviation signal is inputted, the operation of the stopping means 34 is not performed until the molding at the time of the inputting of the signal is completed, and the operation of the stopping means 34 is effected after the molding at the time of the inputting of the signal is completed. Consequently, the article molded at the time when the deviation signal is inputted is taken out from the cavity.

On the other hand, the display means 35 and the recording means 36 display and record the state of the injection molding regardless of the signal from the judging means 31. The display means 35 displays data concerning the mold opening in the injection molding on a display or the like, which will be used as a guide for the operation by the operator. As the way of displaying use can be made of a digital display using 7-segment LED or the like, or an analogue display wherein the amount of mold opening is lit along a prescribed curve. As the displaying method, the display can be made in such a way that since, in addition to the maximum value of the amount of mold opening, there are, for example, information of the amount of opening at the time of clamping, and information of the return amount at the time when the molds have returned from the state of the maximum mold opening, these may be displayed side by side, or only the maximum value of the amount of mold opening may be displayed. The operator can grasp the state of injection molding by monitoring these displays, so that for example the cause can be investigated before the occurrence of a defective and can be removed beforehand.

The recording means 36 is a means of recording the amount of mold opening in injection molding. In injection molding, for example a change in mold opening due to the clamping and injection, and mold return due to cooling occur in every molding, and the amount of mold opening in each of these states is recorded every time by the recording means 6. Further, the maximum value of the mold opening detected by the arithmetic section 9 is also recorded. The data thus recorded serve as reference data concerning the particular injection molding machine and can be used as guides by which the injection molding machine can be controlled to prevent a defective from being formed.

Fig. 2 shows a measuring apparatus 40 equipped with the display means 35 and the detecting means 20. This measuring apparatus 40 is constructed separately from the injection molding machine, and has an power source such as a battery therein to make it of a handy type thereby allowing the measuring apparatus to be used for a different injection molding machine. The measuring apparatus 40 has, in the front panel, an power source switch 41, and a power source switch 42 such as LED, etc. as well as displays 43, 44, 45. These displays 43, 44, 45 display the change of the amount of mold opening in injection molding for every prescribed item, and for example the display 43 displays the amount of opening immediately after the clamping, the display 44 displays the maximum value of the mold opening detected at the time of the injection, and the display 45 displays the return value at the time of the cooling. On the

5

other hand, a cord 46 is led from the measuring apparatus 40, and the end of the cord 46 has a sensor (not shown). The sensor is supported by a supporting member that can arbitrarily attached to the stationary side and movable side mounting blocks 1, 3 (Fig. 3) of the injection molding machine, and can be suitably attached to or detached from the injection molding machine to be measured. In this case, as the supporting member preferably use can be made of a structure that allows easy attachment or detachment through a magnetic attracting force of a magnet or the like. The reference numeral 47 indicates a switch button provided on the side panel of the measuring apparatus 40, and dictates the start of display on the displays 43, 44, 45, and the switch button 47 is pushed when the displaying is to be terminated. For example, when the switch button 47 is pushed after the clamping, the amount of opening at the time of the end of the clamping is displayed on the display 43. Thereafter, when the melted resin is injected and the mold opening starts, the display 44 displays its numerical change. Then, when the maximum value of the mold opening is detected, the display 44 stops the display at that numerical value. Then, after the stage is moved to a cooling step, and when the switch button 47 is pushed again, the operation becomes possible such that the display 45 can display the return value. Since such a handy type measuring apparatus 40 can be attached for different injection molding and can perform the measurement easily, it can be made convenient to investigate the characteristics of every injection molding machine.

Now, an example of the control will be described below.

Fig. 3 is a characteristic diagram obtained by measuring the sensor output along the time axis in injection molding. In this example, the sensor output is in proportion to the distance between the movable mold 4 and the stationary mold 2. The point A indicates the point wherein the stationary mold 2 and the movable mold 4 are closed and clamped by the movement of the movable side mounting block 3, the point B indicates the point wherein the melted resin is injected into the molds, and the point C indicates the point wherein the molds are released to allow the molded articles to be removed. In the characteristic curves a, b, c, and d, the maximum peak appeared between B and C is the maximum value of the amount of mold opening brought forth by the injection of the melted resin. In the case of the characteristic curves a and b wherein this maximum value falls within the prescribed range D, good product can be molded. On the other hand, in the case of the characteristic curve c that is above the range D, the molded article will have burrs, and in the case of the characteristic curve d that is below the range D, a short molded article will be obtained. Therefore, if the maximum value deviates from the range D, since the molded article becomes defective, based on the signal from the judging means the control means 7 carries out the following control.

(1) The driving of the molding machine is stopped.

That is, the stopping means 34 is actuated. Thus, the operator conducts a cause removal process by cleaning the molds to remove soil such as adhered resin, or investigates the cause.

(2) The molded articles from the molds are removed from the production line.

By controlling the takeout means 32, for example the conveyer for the molded articles are driven reversely, or by using the robot hand or the like, the molded articles are taken out into a discarding port. Thus, defectives can be prevented from being included.

(3) An alarm is issued by the buzzer, lamp, etc.

There are some cases wherein if the maximum value of the amount of mold opening deviates from the prescribed range, good articles are molded, and in those cases an alarm is issued to arouse the operator's attention. The operator judges the quality of the molded article based on the alarm, and can take measures such as suspending or stopping of the molding operation on the basis of the result of the judgment.

The above controls can be made separately or may be made simultaneously, or other measures may be taken. Next, the relationship between the maximum value of mold opening and the quality of the molded article will be described based on specific Examples.

Example 1

Fig. 4 (a) and (b) show an Example wherein a filter cassette container 10 for coffee will be injection molded, the container 10 having a gate in the center of the bottom. Fig. 5 shows parts of molds therefore, wherein a cavity 14 for molding the container 10 is defined between a cavity block 12 and a core block 13. The reference numeral 15 indicates a stripper ring plate for pushing out the end of the molded article to release the molded article from the core block 13. Sensors 16, 17 for detecting the mold opening are oppositely provided on the outer surfaces of the cavity block 12 and the core block 13 by brackets 18 respectively. As the sensors 16, 17, magnetic sensors are used, and the sensor 17 is a detecting side sensor, while the sensor 16 is a starting side sensor. In this case, the starting side sensor 16 can be adjusted to be spaced from the sensor 17. The cavity block 12 and the core block 13 are provided on the opposite sides of a hot runner (not shown), and the block 12 and the block 13 positioned on the opposite sides serve as a movable mold and a stationary mold respectively. In this Example, 8 cavities are formed, so that 8 articles can be formed by one injection, and the sensors 16, 17 are attached for the respective cavities as shown in Fig. 5. Hereinafter, the cavities are designated #1 to #8, and the maximum values of the amount of mold opening at the time of clamping and injection, and the intervals between the stationary mold and the movable mold after the returning from the mold opening are shown in Table 1. The unit of the numerical values is $\mu$m.

Table 1

| Cavity | after 20 min of kickoff | | | after 8 hours of kickoff | | |
|---|---|---|---|---|---|---|
| | Clamping | Maximum of mold opening | Return from mold opening | Clamping | Maximum of mold opening | Return from mold opening |
| #1 | 0 | 25 | 0 | 6 | 26 | 0 |
| #2 | 0 | 27 | 0 | 7 | 27 | 0 |
| #3 | 0 | 26 | 0 | 6 | 27 | 0 |
| #4 | 0 | 26 | 0 | 8 | 26 | 0 |
| #5 | 0 | 28 | 0 | 7 | 28 | 0 |
| #6 | 0 | 27 | 0 | 8 | 27 | 0 |
| #7 | 0 | 25 | 0 | 6 | 26 | 0 |
| #8 | 0 | 26 | 0 | 5 | 27 | 0 |

Table 1 shows numeral values of continuous operation of 100 shots after the kickoff. The column under "Clamping" shows the intervals at the time of clamping under a pressure of 150 t, the column under "Maximum of mold opening" shows the maximum values of mold opening assuming the value of mold opening at the time of the above clamping to be "0", and the column under "Return from mold opening" shows intervals assuming the value of mold opening at the time of clamping to be "0". In Table 1, after 8 hours of kickoff, since the column under "Clamping" shows several micrometers, it will be inferred that resin residue adhered to the parting surfaces of the molds, which will be used as a guide for cleaning the molds.

Table 2 shows the results of the measurement of the maximum values of the mold opening in respective shots that were obtained when injection molding was effected using the above molds. The clamping force was 150 t for all the shots. In the case of the cavity #1, from the seventh shot, the temperature of the hot runner section changed from 250 °C to 235 °C, and in the case of the cavity #6, from the thirteenth shot, the hot runner section changed similarly.

After that change, in the case of the cavity #1, from the ninth shot, and in the case of the cavity #6, from the fifteenth shot, the maximum value of the amount of mold opening lowered, and short molded articles appeared wherein part of them were missing as shown in Fig. 7 (a). In this connection, as a reaction, the amount of mold opening of the cavity #4 and the cavity #7 located diagonally opposite to the cavity #1 and the cavity #6 was increased, but the increase in this amount did not cause the molded articles to have burrs. From this it can be understood that, in the case of the cavity wherein the maximum value of the amount of mold opening drops sharply, some unpreferable change arises, making the molded article defective.

Table 2

| | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|
| #1 | 25 | 25 | 25 | 26 | 25 | 25 | 24 | 20 | 10 | 11 | 10 | 10 | 10 | 11 | 10 | 10 | 10 | 10 | 10 | 10 |
| #2 | 27 | 27 | 27 | 27 | 26 | 27 | 25 | 27 | 27 | 27 | 27 | 28 | 28 | 28 | 28 | 28 | 27 | 28 | 28 | 28 |
| #3 | 26 | 26 | 26 | 26 | 26 | 26 | 26 | 27 | 27 | 27 | 27 | 27 | 27 | 27 | 28 | 28 | 28 | 28 | 29 | 29 |
| #4 | 26 | 26 | 26 | 26 | 26 | 26 | 27 | 27 | 35 | 35 | 36 | 35 | 36 | 36 | 36 | 36 | 36 | 36 | 35 | 36 |
| #5 | 28 | 27 | 28 | 28 | 27 | 28 | 27 | 28 | 29 | 28 | 28 | 28 | 28 | 28 | 29 | 28 | 28 | 27 | 27 | 28 |
| #6 | 27 | 26 | 27 | 27 | 27 | 27 | 26 | 27 | 27 | 27 | 27 | 27 | 23 | 21 | 11 | 10 | 10 | 11 | 10 | 10 |
| #7 | 25 | 25 | 25 | 25 | 26 | 25 | 24 | 26 | 26 | 26 | 26 | 26 | 27 | 30 | 37 | 36 | 35 | 35 | 36 | 35 |
| #8 | 26 | 26 | 26 | 27 | 26 | 26 | 25 | 27 | 27 | 27 | 27 | 26 | 27 | 27 | 28 | 28 | 28 | 28 | 28 | 28 |

Table 3 shows the maximum values of the amount of mold opening in the case wherein only the clamping force was adjusted to 150 t, and other factors including the heating of the hot runner section, the temperature of the melted resin, and the cooling rate were set to carry out the molding. In Table 3, the mark "*" and the mark "△" are attached to the maximum values that changed sharply. The mark "*1" indicates the case wherein short molding in which part was missing as shown in Fig. 7 (a) occurred, the mark "*2"

10

indicates the case wherein large short molding as indicated in Fig. 7 (b) occurred, the mark "*3" indicates the case wherein more larger short molding as shown in Fig. 7 (c) occurred, and the mark "*4" indicates the case wherein short molding occurred that brought about a molded article that did not form a container. The mark "▲" indicates the case wherein a molded article having burrs blocking completely the opening in the bottom of the container was formed, and the mark "△" indicates the case wherein a molded article having burrs partially blocking the opening in the bottom of the container was formed.

Table 3

| | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|
| #1 | 25 | 25 | 25 | 25 | 26 | 25 | 23 | 20 | 10*1 | 10*1 | 8*2 | 7*2 | 5*3 | 5*3 | 5*3 | 2*4 | 3*4 | 2*4 | 3 | 3 |
| #2 | 27 | 27 | 27 | 26 | 27 | 26 | 26 | 26 | 28 | 28 | 38 | 39 | △60 | △61 | △63 | △68 | △68 | △69 | △68 | △68 |
| #3 | 26 | 26 | 26 | 26 | 26 | 26 | 26 | 27 | 27 | 28 | 37 | 40 | △62 | △60 | △62 | △69 | △69 | △68 | △68 | △69 |
| #4 | 26 | 26 | 27 | 26 | 26 | 26 | 27 | 28 | 35 | 36 | ▲80 | ▲88 | ▲80 | ▲78 | △75 | △70 | △70 | △70 | △70 | △69 |
| #5 | 28 | 27 | 28 | 28 | 28 | 28 | 28 | 28 | 28 | 27 | 40 | 39 | △61 | △60 | △61 | △69 | △69 | △69 | △69 | △70 |
| #6 | 27 | 27 | 26 | 27 | 26 | 27 | 27 | 27 | 27 | 27 | 39 | 40 | △60 | △61 | △62 | △68 | △68 | △68 | △69 | △68 |
| #7 | 25 | 25 | 25 | 25 | 25 | 25 | 25 | 26 | 26 | 27 | 37 | 38 | △61 | △60 | △60 | △68 | △68 | △68 | △69 | △69 |
| #8 | 26 | 26 | 26 | 27 | 26 | 27 | 27 | 27 | 27 | 27 | 38 | 40 | △57 | △57 | △59 | △68 | △68 | △69 | △70 | △69 |

Then, using the molds shown in Fig. 5 and Fig. 6, articles were injection molded continuously for 96 hours. The molding conditions were as given below. (1) The clamping force was 150 t, and 5.6 sec were used for the clamping, the molding, and the removal (dropping under their own weight) in all. (2) Taking the allowance range of the size of the mold opening at the time of clamping to be 15 $\mu$m, and in the case when the clamping exceeding this range continued 5 shots, the driving of the molding machine was stopped and the molds were cleaned. (3) Setting the allowance range of the change of the maximum value of the mold opening at the time of shot to be down to 5 $\mu$m but up to 50 $\mu$m, the molded article falling outside this range was discharged automatically as a defective article from the line into the discarding port (i.e., discharged on the side opposite to the side where normal articles were placed by reversely driving the conveyer). (4) Taking the allowance range of the opening size at the time of returning from the clamping to be 5 $\mu$m, the molded articles deviating from this range were discharged into the discarding port. (5) When the driving of the molding machine was stopped for 5 min or over, until 10 shots were completed after the resuming of the driving, the molded articles were discharged into the discarding port.

As a result of the molding under the above conditions, there were 8 molding operations falling under condition (2), producing 320 molded articles, all of which were confirmed by the check by the operator that they were good articles. There were 16 molding operations falling under condition (3), and of 128 molded articles, 16 articles were defective, and the remaining articles were good ones. There were 20 molding operations falling under condition (4), and of 160 molded articles, 26 molded articles were defective, and the remaining articles were good ones. There were 5 molding operations falling under condition (5), and of 400 molded articles, 123 molded articles were defective, and the remaining articles were good ones. Thus, the total number of the defectives was 165. The molded articles that were outside conditions (2) to (5) were all good, and the total number thereof was 489,112. Therefore, the good ones were 489,955 in all including obtained under conditions (2) to (5). Since the theoretical number of articles that would be produced in continuous production for 96 hours was 493,714, the yield of the molding was 99.25 %.

Example 2

In this Example, flat trays 26 as shown in Fig. 8 were injection molded. As mold, use was made of one having cavities 24 defined by a stationary side cavity block 21, a movable side cavity block 22, and an ejector core 23. The reference numeral 25 indicates an ejector port for the removal of the molded article. This mold has two cavities 24 as shown in Fig. 10, and two molded articles can be obtained by a single injection. Sensors 17 were attached in such a way that two sensors 17 were attached to the upper part and the lower part of the cavity #11 respectively, and two sensors 17 were attached to the upper part and the lower part of the cavity #12 respectively thereby measuring the amount of mold opening. Thus, hereinafter, abbreviations "upper #11," "lower #11," "upper #12," and "lower #12" are used.

Table 4 and Table 5 show the clamping after kickoff, the maximum value of mold opening, and the return from mold opening after kickoff, which correspond to Table 1 in Example 1. In Table 4, the clamping was made under a pressure of 210 t, and in Table 5, the clamping was made under a pressure of 187 t.

**Table 4**

| Cavity | after 20 min of kickoff | | | after 24 hours of kickoff | | |
|---|---|---|---|---|---|---|
| | Clamping | Maximum of mold opening | Return from mold opening | Clamping | Maximum of mold opening | Return from mold opening |
| Upper #11 | 0 | 8 | 0 | 5 | 8 | 0 |
| Lower #11 | 0 | 10 | 0 | 6 | 10 | 0 |
| Upper #12 | 0 | 9 | 0 | 7 | 10 | 0 |
| Lower #12 | 0 | 7 | 0 | 6 | 8 | 0 |

**Table 5**

| Cavity | after 20 min of kickoff | | | after 24 hours of kickoff | | |
|---|---|---|---|---|---|---|
| | Clamping | Maximum of mold opening | Return from mold opening | Clamping | Maximum of mold opening | Return from mold opening |
| Upper #1 | 0 | 25 | 0 | 6 | 26 | 0 |
| Lower #2 | 0 | 27 | 0 | 7 | 27 | 0 |
| Upper #1 | 0 | 26 | 0 | 8 | 26 | 0 |
| Upper #2 | 0 | 24 | 0 | 6 | 24 | 0 |

Table 6 shows the results of the measurement of the maximum values of mold opening for respective shots in the injection molding using the molds shown in Figs. 9 and 10. In this case, the clamping force was 187 t, and after the second shot the temperature of the hot runner section was decreased from 250 °C to 230 °C. As apparent from Table 6, when the temperature of the hot runner section changes, then the maximum value of mold opening becomes small. After the fourth shot, short molded articles were obtained. Therefore, by measuring the maximum value of mold opening, the change in the temperature of the hot runner section can be monitored indirectly, and also the formation of defective articles can be detected.

13

Table 6

| Cavity | Shot | | | | | | | |
|---|---|---|---|---|---|---|---|---|
| | 1 | 2 | 3 | 4 | 5 | 6 | 7 | 8 |
| Upper #11 | 25 | 24 | 20 | 10 | 9 | 8 | 8 | 8 |
| Lower #11 | 27 | 26 | 21 | 12 | 10 | 10 | 10 | 10 |
| Upper #12 | 26 | 25 | 20 | 12 | 11 | 10 | 10 | 10 |
| Lower #12 | 24 | 24 | 19 | 10 | 9 | 8 | 9 | 8 |

Table 7 shows the results of the maximum values of the amount of mold opening for respective shots when the temperature of the hot runner section to the cavity #11 was increased from 235 °C to 260 °C at the second shot. In the case of the cavity #11, molded articles having burrs were obtained after the eigth shot, and in the case of the cavity #12, short molded articles were obtained after the eigth shot. From this, it is considered that the cavity #12 underwent gradually the influence of the mold opening of the cavity #11, and the influence of the cavities upon each other can be detected from the amount of mold opening. In Table 7, the mark "*1" falls within the range of good articles though having thin burrs, and the mark "*2" indicates defective articles having apparent burrs.

Table 7

| Cavity | Shot 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Upper #11 | 25 | 25 | 27 | 29 | 32 | 40*1 | 53*1 | 60*2 | 63*2 | 64*2 | 63*2 | 64 | 64 | 65 | 64 |
| Lower #11 | 27 | 27 | 29 | 30 | 35 | 42 | 55 | 61 | 65 | 65 | 65 | 66 | 65 | 67 | 65 |
| Upper #12 | 26 | 26 | 26 | 26 | 27 | 28 | 29 | 30 | 30 | 31 | 31 | 31 | 31 | 32 | 31 |
| Lower #12 | 24 | 25 | 24 | 25 | 25 | 26 | 20 | 15 | 13 | 12 | 13 | 13 | 13 | 13 | 13 |

Table 8 shows the results of the measurement of the maximum values of the amount of mold opening in the case wherein from the second shot the temperature of the injection cylinder to melt the synthetic resin was increased by 10 °C, and in the case wherein from the ninth shot that temperature was increased by a further 10 °C. In either any of the cavities, the molded articles had burrs from the eleventh shot. Therefore, by measuring the maximum value of mold opening, the change in the temperature of the

15

injection cylinder can be monitored indirectly, and also the formation of defective articles can be detected.

Table 8

| Cavity | Shot 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Upper #11 | 25 | 25 | 26 | 29 | 35 | 36 | 36 | 37 | 36 | 37 | 45 | 51 | 58 | 58 | 57 |
| Lower #11 | 27 | 27 | 29 | 31 | 37 | 37 | 37 | 38 | 37 | 39 | 47 | 53 | 60 | 59 | 59 |
| Upper #12 | 26 | 26 | 28 | 30 | 37 | 36 | 36 | 37 | 37 | 39 | 47 | 52 | 59 | 59 | 59 |
| Lower #12 | 25 | 24 | 26 | 28 | 36 | 35 | 35 | 35 | 36 | 38 | 46 | 50 | 57 | 58 | 58 |

In addition, the inventors have confirmed that other molding conditions than those mentioned above for example the change in the temperature of cooling water, the change in the amount of cooling water, the change in the clamping force, the change in the amount of gas escaping from the cavity, and a combination of these could be grasped by measuring the maximum value of the amount of mold opening.

16

Then, molding was carried out continuously for 96 hours under the same molding conditions as Example 1, except that the clamping force was adjusted to 187 t, and the period until the takeout of the molded article was 22 sec. In this case, there were 4 molding operations under condition (2) stated in Example 1, and all 40 molded articles were good ones. There were no defective articles in the molding under conditions (3), (4) and (5) stated in Example 1. There were 31,310 good molded articles, amounting to 31,350 good molded articles in all. Since in this continuous molding, the theoretical number of the articles that would be produced was 31,418, the yield of the molding was 99.78 %.

Industrial Applicability

As stated above, the method of controlling injection molding according to the present invention can control injection molding by using as index only the maximum value of mold opening at the time of injection without needing monitoring of many factors that will lead to the formation of defectives. Thus, the present controlling method is suitable for injection molding machines for judging the quality of molded articles with the operation simple, and particularly suitable for controlling multi-cavity injection molding machines that are liable to have a composite cause of many entwined factors. The controlling apparatus for injection molding according to the present invention can be mounted to an injection molding machine in addition to the essential function, can be applied to any one of all conventional injection molding machines without changing the design, and can be used generally.

**Claims**

1.  A method of controlling injection molding, in a multi-cavity mold for obtaining a plurality of molded articles wherein a single injection is controlled by detecting for each mold cavity the maximum value of the amount of mold opening between a stationary mold and a movable mold opened by the injection pressure due to the injection of a melted resin and by using this detected maximum value as a judgement factor for controlling the injection molding.

2.  An apparatus for controlling injection molding, comprising detecting means for detecting the maximum value of the amount of mold opening between a stationary mold and a movable mold opened by the injection pressure of a melted resin, a setting means of setting the upper limit value and the lower limit value of the amount of mold opening between the stationary mold and the movable mold, a judging means of comparing the detection value of said detecting means with the set values of said setting means and for judging whether the detection value is within the range of the set value or not, characterized in that said stationary mold and that movable mold cooperate with each other in the closed condition thereof to define a plurality of cavities, said melted resin being injected at the same time into said plurality of cavities, each cavity being provided with a detecting means, and that the apparatus further comprises a controlling means of performing control to handle the molded articles that have been molded when said detection value of each cavity deviates from the range of the set value in a different manner from that for normal molded articles.

3.  The apparatus of claim 2, characterized in that said controlling means controls the molded article that has been molded when said detecting value has deviated from the range of the set value in such a way that said molded article may be taken out through a route different from that for normal molded articles.

4.  The apparatus as claimed in claim 2, characterized in that when said detection value deviates from the range of the set value, said controlling means controls said apparatus to display to said effect.

**Patentansprüche**

1.  Verfahren zum Steuern von Spritzgießvorgängen, bei einem Werkzeug mit mehreren Höhlungen zum Gewinnen einer Mehrzahl von Formteilen, bei dem ein einzelner Einspritzvorgang gesteuert wird durch das Erkennen des Maximalwertes des Betrages der Öffnung des Werkzeugs zwischen einem ortsfesten Werkzeugelement und einem beweglichen Werkzeugelement, der durch den Einspritzdruck aufgrund des Einspritzens des geschmolzenen Kunststoffes geöffnet wird, für jede Höhlung des Werkzeugs, und durch Verwendung dieses erkannten Maximalwertes als einen Beurteilungsfaktor für das Steuern des Spritzgießens.

**2.** Eine Vorrichtung zum Steuern des Spritzgießens, mit Erkennungsmitteln zum Erkennen des Maximalwertes des Betrages einer Werkzeugöffnung zwischen einem ortsfesten Werkzeugelement und einem beweglichen Werkzeugelement, das durch den Einspritzdruck des geschmolzenen Kunststoffs geöffnet wird, Einstellmitteln zum Einstellen des oberen Grenzwertes und des unteren Grenzwertes des Betrages der Werkzeugöffnung zwischen dem ortsfesten Werkzeug und dem beweglichen Werkzeug, und Beurteilungsmitteln zum Vergleichen des Erkennungswerts des Erkennungsmittels mit den eingestellten Werten der Einstellmittel und zum Beurteilen, ob der Erkennungswert innerhalb des Bereiches des eingestellten Wertes ist oder nicht, dadurch gekennzeichnet, daß das ortsfeste Werkzeug und das bewegliche Werkzeug miteinander in dem geschlossenen Zustand kooperieren, um eine Mehrzahl von Höhlungen zu bilden, der geschmolzene Kunststoff zu demselben Zeitpunkt in die Mehrzahl von Höhlungen eingespritzt wird, jede Höhlung mit einem Erkennungsmittel versehen ist und daß die Vorrichtung weiter ein Steuermittel aufweist zum Ausfuhren der Steuerung zum Handhaben der Formteile, die geformt worden sind, wenn der Erkennungswert einer der Höhlungen von dem Bereich des gesetzten Werts in einer unterschiedlichen Weise von demjenigen normaler Formteile abweicht.

**3.** Die Vorrichtung nach Anspruch 2, dadurch gekennzeichnet, daß das Steuermittel die Formteile, die geformt worden sind, wenn das Erkennungsmittel eine Abweichung von dem Bereich von dem eingestellten erkennen, auf eine solche Weise steuert, daß das Formteil über einen Weg, der von demjenigen für normale Formteile abweicht, herausgenommen werden kann.

**4.** Die Vorrichtung nach Anspruch 2, dadurch gekennzeichnet, daß dann, wenn der Erkennungswert von dem Bereich des gesetzten Wertes abweicht, das Steuermittel die Vorrichtung steuert, um dieses Ereignis anzuzeigen.

**Revendications**

**1.** Procédé de commande d'un moulage par injection dans un moule à cavité multiple, pour obtenir une pluralité d'articles moulés, dans lequel une injection unique est commandée en détectant, pour chaque cavité de moule, la valeur maximale de l'ouverture de moule, entre un moule stationnaire et un moule mobile ouvert sous l'effet de la pression d'injection due à l'injection d'une résine en fusion, et en utilisant cette valeur maximale détectée comme facteur d'appréciation pour commander le moulage par injection.

**2.** Appareil de commande d'un moulage par injection, comprenant un moyen de détection pour détecter la valeur maximale de l'ouverture de moule entre un moule stationnaire et un moule mobile ouvert par la pression d'injection d'une résine en fusion, un moyen de réglage, servant à régler la valeur limite supérieure et la valeur limite inférieure de la valeur d'ouverture du moule, entre le moule stationnaire et le moule mobile, un moyen d'appréciation, servant à comparer la valeur de détection dudit moyen de détection avec les valeurs de réglage dudit moyen de réglage et pour apprécier si la valeur de détection se situe ou non dans la plage de la valeur de réglage, caractérisé en ce que ledit moule stationnaire et ce moule mobile coopèrent l'un avec l'autre dans leur état fermé, afin de définir une pluralité de cavités, ladite résine en fusion étant injectée en même temps dans ladite pluralité de cavités, chaque cavité étant pourvue d'un moyen de détection et ce que l'appareil comprend en outre un moyen de commande servant à effectuer une commande permettant de manipuler, d'une manière différente de celle pour des articles moulés normaux, les articles à mouler déjà moulés, lorsque ladite valeur de détection de chaque cavité sort de la plage de la valeur établie.

**3.** Appareil selon la revendication 2, caractérisé en ce que ledit moyen de commande commande l'article à mouler déjà moulé lorsque ladite valeur de détection a dévié de la plage de la valeur établie, de manière que ledit article à mouler puisse être extrait suivant une trajectoire différente de celle destinée aux articles moulés normaux.

**4.** Appareil selon la revendication 2, caractérisé en ce que, lorsque ladite valeur de détection sort de la plage de la valeur de réglage, ledit moyen de commande commande l'affichage dudit effet par ledit appareil.

# F I G . I

# F I G . 2

EP 0 407 577 B1

# F I G. 3

21

# F I G . 4

## (a)

## (b)

# F I G . 5

# F I G . 6

EP 0 407 577 B1

# F I G . 7

(a)

(b)

10

10

(c)

(d)

10

23

EP 0 407 577 B1

# F I G . 8

# F I G . 9

# F I G . 10

24